# EUROPEAN PATENT SPECIFICATION

(11) **EP 4 442 547 B1**
(45) Date of publication and mention of the grant of the patent: **17.12.2025**
(21) Application number: 24164338.6
(22) Date of filing: 19.03.2024
(51) Int. Cl.: B62J 1/08, A47C 3/30

(54) **HEIGHT-ADJUSTABLE SEATPOST WITH SHOCK ABSORPTION**
HÖHENVERSTELLBARE SATTELSTÜTZE MIT STOSSDÄMPFUNG
TIGE DE SELLE RÉGLABLE EN HAUTEUR AVEC ABSORPTION DES CHOCS

(30) Priority: 25.03.2023 TW 112202747 U
(43) Date of publication of application: 09.10.2024
(73) Proprietor: J.D Components Co., Ltd., Shou Shui Hsiang, Chang Hua Hsien (TW)
(72) Inventor: KUO, NIEN-TENG, CHANG HUA HSIEN (TW)
(74) Representative: Straus, Alexander

(56) References cited:
- CN-Y- 2 261 975
- US-A1- 2021 214 031
- US-B1- 8 302 983
- US-B1- 9 957 008

## Description

### FIELD OF THE INVENTION

The present disclosure relates to a seatpost for bicycles and more particularly, to a seatpost with shock absorption that reduces the likelihood of the saddle being raised to an unexpected height for the rider.

### BACKGROUND OF THE INVENTION

Some prior bicycles equipped with height-adjustable seatposts allows riders to control the seatpost based on different road conditions (such as uphill or flat roads) to adjust the height of the saddle connected to the seatpost to an appropriate height. As a result, the riders can ride the bicycles in a more suitable position, thereby enhancing the riding comfort and safety.

As described in Taiwan Patent Application No. M523651, a shock-absorbing seatpost of bicycle includes an outer tube, an inner tube, a seatpost adjustment member, and a buffer unit located inside the inner tube. The seatpost adjustment member drives the inner tube to move vertically relative to the outer tube. The buffer unit is configured to provide a preload to the seatpost and to absorb shocks. When a rider sits on the saddle, the rider's weight applies a pressure to the buffer unit, lowering the saddle a compressed distance. When the rider wants to adjust the saddle higher, the rider must first get off the saddle and then operate the seatpost adjustment member. In such a situation, because the pressure applied to the buffer unit is released after the rider gets off the saddle, the inner tube not only moves up a distance due to the operation, but also moves up the compressed distance. As a result, there will be a difference between the rider's expected saddle height and the actual saddle height after the seatpost adjustment. That is to say, the saddle may be raised higher than the rider's expected height. Therefore, improvements to the structure of the prior bicycles are required.

CN2261975 Y discloses a height-adjustable seatpost with shock absorption with the features of the preamble of claim 1.

### SUMMARY OF THE INVENTION

It is an objective of the present disclosure to provide a height-adjustable seatpost with shock absorption and capable of reducing the difference between the rider's expected saddle height and the actual saddle height after the seatpost adjustment, thereby reducing the likelihood of the saddle being raised to an unexpected height for the rider.

A height-adjustable seatpost with shock absorption provided in the present disclosure includes an outer tube, an inner tube, a height adjustment mechanism, and a shock absorber. The inner tube is vertically movable disposed in the outer tube and has a head located outside the outer tube and a bottom opposite the head and situated inside the outer tube. The inner tube has a stop flange located on the inner wall thereof. The height adjustment mechanism is located inside the inner tube and is configured to drive the inner tube to move relative to the outer tube. The height adjustment mechanism includes a stopper located above the stop flange and can be abutted against the stop flange. The shock absorber has two ends respectively abutted against the head of the inner tube and the stopper.

Furthermore, the height adjustment mechanism has a pneumatic cylinder including a valve seat and a valve stem. The valve stem is vertically movable disposed in the valve seat and connected to the outer tube, thereby allowing the inner tube to move upwardly relative to the outer tube when the valve stem extends.

Based on the structural design of the height-adjustable seatpost, when a rider wants to adjust the height of the saddle and thus gets off the saddle, because the pressure applied to the shock absorber is released, the stop flange of the inner tube abuts against the stopper of the height adjustment mechanism. As a result, the position of the inner tube relative to the outer tube remains the same before the inner tube is driven, no matter how great the compressed distance is. Accordingly, when the rider operates the height adjustment mechanism to adjust the saddle higher, the difference between the rider's expected saddle's travel distance and the actual travel distance of the height-adjustable seatpost can be effectively reduced, thereby preventing the saddle from being raised to an unexpected height.

In another aspect, the valve seat and the stopper may be made separately or integrally. In the condition that the valve seat and the stopper are made separately, a screw hole may be provided at the top of the valve seat and a through hole may be provided in the stopper. The height adjustment mechanism may further include a screw passing through the through hole and screwing into the screw hole to secure the stopper to the top of the valve seat. Alternatively, the stopper can be formed by directly machining the top of the valve seat.

In another aspect, the shock absorber may be a shock-absorbing rubber, a compression spring, or even a combination of an air chamber and a floating piston. The shock absorber is not limited to the embodiments described below.

In another aspect, the shock absorber may also have a recess disposed at the bottom thereof. The screw of the height adjustment mechanism may have an integrated screw head and screw rod. After the screw is inserted into the stopper, the screw head protrudes from the top surface of the stopper and is received in the recess of the shock absorber. In this way, the shock absorber can be effectively positioned, thereby allowing the shock absorber to be compressed or extended in the correct position. Preferably, the recess of the shock absorber may also have an inner ring surface tightly connected to the screw head so as to enhance the positioning effect.

In another aspect, the inner tube may further have a cap provided with an external thread around the outer edge thereof. The head of the inner tube may have a screw hole engaged with the cap of the inner tube to enclose the shock absorber inside the inner tube.

### BRIEF DESCRIPTION OF DRAWINGS

The detailed construction, technical features, assembly, or usage of the height-adjustable seatpost with shock absorption provided by the present disclosure will be described in the detailed description of the subsequent embodiments.
FIG. 1 is a perspective view of a height-adjustable seatpost according to one embodiment of the present disclosure.
FIG. 2 is an exploded perspective view of the height-adjustable seatpost shown in FIG. 1.
FIG. 3 is a partial enlarged exploded perspective view of a height adjustment mechanism shown in FIG. 2.
FIG. 4 is a cross-sectional side view of the height-adjustable seatpost shown in FIG. 1, depicting the situation that the overall length of the height adjustment mechanism is minimized and the shock absorber is compressed.
FIG. 5 is a cross-sectional side view of the height-adjustable seatpost shown in FIG. 1, depicting the situation that the stop flange abuts against the stopper after the pressure applied to the shock absorber is released and the inner tube is driven by the height adjustment mechanism.

### DETAILED DESCRIPTION OF THE INVENTION

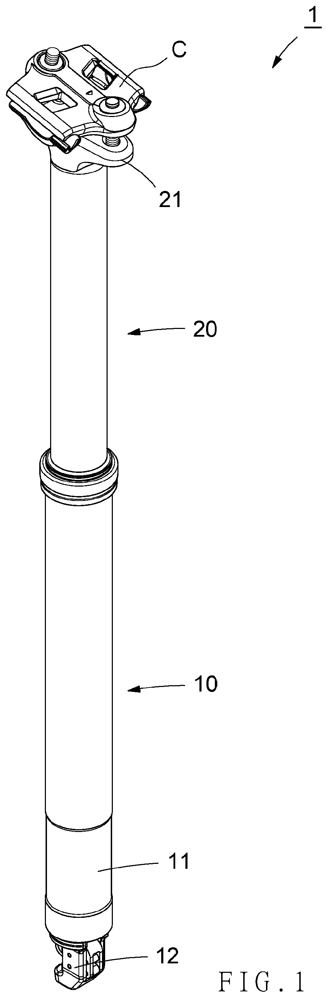

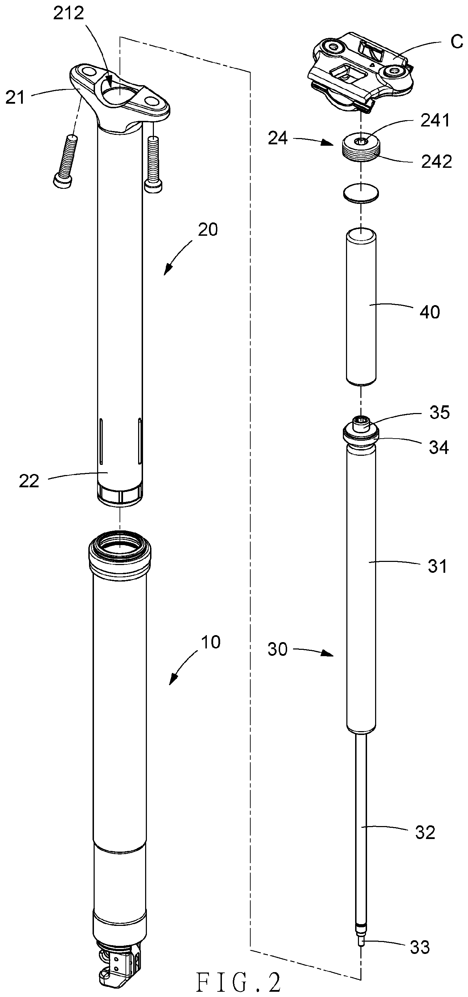

The present disclosure is described in detail with reference to the following embodiments and accompany drawings. As shown in FIGS. 1 and 2, a height-adjustment seatpost 1 with shock absorption provided in one embodiment of the present disclosure comprises an outer tube 10, an inner tube 20, a height adjustment mechanism 30, and a shock absorber 40.

The outer tube 10 is disposed inside a seat tube (not shown) of a bicycle frame, and the bottom 11 of the outer tube 10 is equipped with a linkage mechanism 12.

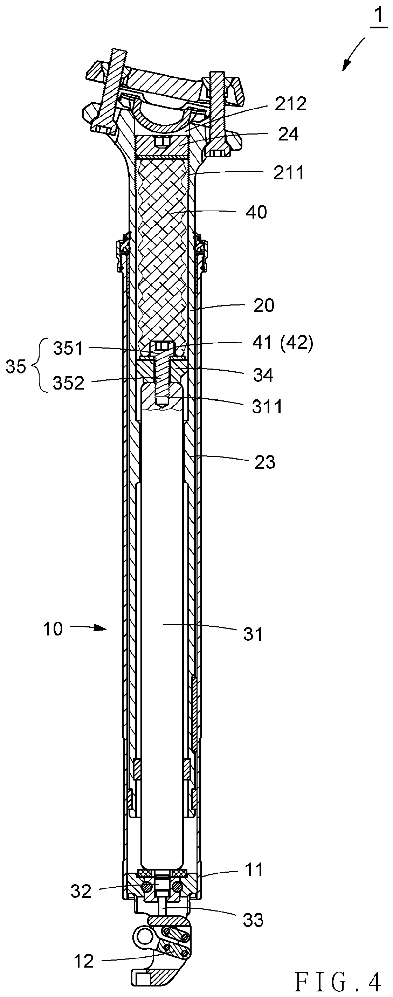

The inner tube 20 is vertically movable disposed in the outer tube 10 and has a head 21 and a bottom 22 opposite to each other. The head 21 is located outside the outer tube 10 and the bottom 22 is situated inside the outer tube 10. The head 21 is equipped with a clamping seat C for mounting a saddle (not shown). The top side of the head 21 is provided with a screw hole 211 communicating with the interior of the inner tube 20, and is provided with an opening 212 communicating with the exterior of the inner tube 20. As shown in FIG. 4, the inner tube 20 also has a stop flange 23 arranged around the inner wall of the inner tube 20. Additionally, the inner tube 20 equipped with a cap 24. The cap 24 has an end with a hexagonal hole (e.g. an Allen key hole) 241 and is provided with an external thread 242 around the outer edge thereof (see FIG. 2). The cap 24 is engaged with the screw hole 211 of the head 21 of the inner tube 20 (see FIG. 4).

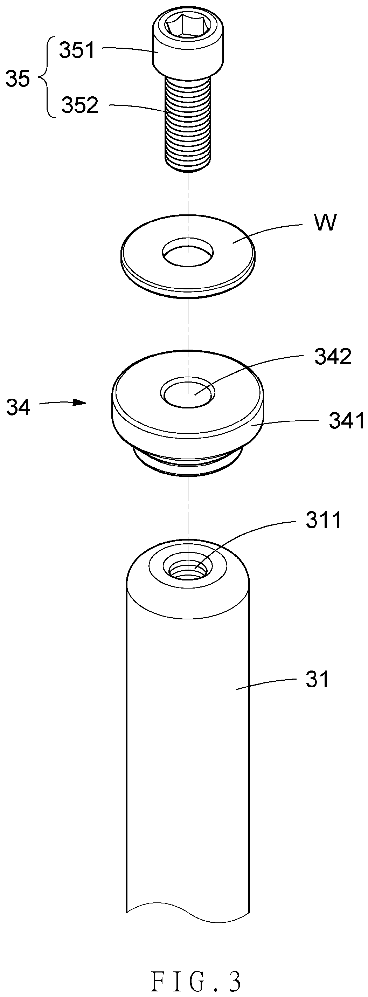

Referring to FIGS. 2 to 4, the height adjustment mechanism 30 is installed inside the inner tube 20 and drives the inner tube 20 to move relative to the outer tube 10. In this embodiment, the height adjustment mechanism 30 is installed inside the inner tube 20 through the opening 212 of the head 21 and is connected to the outer tube 10. Specifically, the height adjustment mechanism 30 is a pneumatic cylinder including a valve seat 31 and a valve stem 32 vertically movable within the valve seat 31 and connected to the bottom 11 of the outer tube 10. The valve stem 32 has an end provided with a trigger lever 33. The trigger lever 33 is able to be triggered by the linkage mechanism 12 to retract or extend the valve stem 32 into or out of the valve seat 31. As shown in FIG. 3, the height adjustment mechanism 30 further includes a stopper 34 and a screw 35. The top of the valve seat 31 is provided with a screw hole 311, and the stopper 34 has an annular protrusion 341 and a through hole 342. The annular protrusion 341 has a lateral size larger than a lateral size of the valve seat 31, as shown in FIG. 4. The screw 35 has an integrated screw head 351 and a screw rod 352. The screw head 351 protrudes from the top surface of the stopper 34. The screw rod 352 passes through a washer W and the through hole 342 of the stopper 34 and is engaged with the screw hole 311 of the valve seat 31 to fix the stopper 34 to the top of the valve seat 31. The stopper 34 is located above the stop flange 23 so that the stop flange 23 is able to be abutted against the annular protrusion 341 of the stopper 34.

It is worth mentioning that in some situations, the stopper 34 may be manufactured by machining so that the stopper 34 is integrally connected to the valve seat 31.

In this embodiment, the shock absorber 40 is essentially a shock-absorbing rubber having elasticity and being capable of elastically deforming under an external force so as to provide a buffering and shock absorbing effect. The shock absorber 40 has an upper end and a lower end respectively abutted against the cap 24 of the inner tube 20 and the stopper 34. The shock absorber 40 has a recess 41 disposed at the bottom thereof, and the recess 41 has an inner ring surface 42. The screw head 351 is received in the recess 41 and tightly connected to the inner ring surface 42 so that the shock absorber 40 can be effectively positioned above the stopper 34.

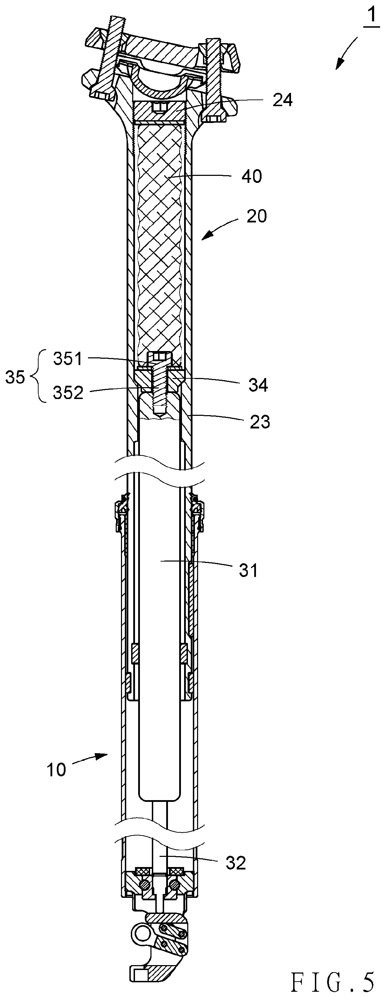

Based on the structural design of the height-adjustable seatpost 1, when a rider retracts the valve stem 32 of the height adjustment mechanism 30 to the shortest length, the inner tube 20 is placed at the lowest position. After the rider sits on the saddle, the rider's weight applies a force to the cap 24 of the inner tube 20, which in turn pushes against the shock absorber 40. At this time, because the height adjustment mechanism 30 and the stopper 34 are stand still, the shock absorber 40 is compressed and accumulates elasticity, resulting in that the inner tube 20 moves a compressed distance downward, as shown in FIG. 4. The compressed distance depends on the rider's weight; the heavier the rider is, the greater the compressed distance is. Then, when the rider wants to adjust the height of the saddle and thus gets off the saddle, the force applied to the shock absorber 40 is released and thus the elastic rebounding force of the shock absorber 40 drives the inner tube 20 to move upward, the stop flange 23 of the inner tube 20 abuts against the stopper 34 of the height adjustment mechanism 30, as shown in FIG. 5. As a result, the position of the inner tube 20 relative to the outer tube 10 remains the same before the inner tube 20 is driven, no matter how great the compressed distance is. After that, when the valve stem 32 of the height adjustment mechanism 30 is driven to extend by the rider, the inner tube 20 can be driven to move upward to a desired or a predetermined height. That is to say, the difference between the rider's expected saddle's travel distance and the actual travel distance of the height-adjustable seatpost can be effectively reduced. Accordingly, the likelihood of the saddle being raised to an unexpected height can be effectively reduced.

While the present disclosure has been described with reference to the above embodiments, it should be understood that the embodiments are provided for illustrative purposes only and are not intended to limit the scope of the present invention which is defined by the appended claims.

## Claims

1. A height-adjustable seatpost (1) with shock absorption, comprising:
an outer tube (10);
an inner tube (20) vertically movably disposed in the outer tube and having a head (21) located outside the outer tube (10) and a bottom (22) opposite the head (21) and situated inside the outer tube (10), the inner tube (20) further having a stop flange (23) located on an inner wall of the inner tube (20);
a height adjustment mechanism (30) located inside the inner tube (20) and being configured to drive the inner tube (20) to move relative to the outer tube (10), the height adjustment mechanism (30) having a stopper (34) located above the stop flange (23) and being abuttable against the stop flange (23); and
a shock absorber (40) having two ends respectively abutted against the head (21) of the inner tube (20) and the stopper (34);
**characterized in that** the height adjustment mechanism (30) is a pneumatic cylinder including a valve seat (31) and a valve stem (32) vertically movably disposed in the valve seat (31) and connected to the outer tube (10).

2. The height-adjustable seatpost (1) as claimed in claim 1, **characterized in that** the valve seat (31) has a top provided with a screw hole (311), the stopper (34) has a through hole (342), and the height adjustment mechanism (30) includes a screw (35) passing through the through hole (342) and screwing into the screw hole (311).

3. The height-adjustable seatpost (1) as claimed in claim 2, **characterized in that** the shock absorber (40) is a shock-absorbing rubber.

4. The height-adjustable seatpost (1) as claimed in claim 3, **characterized in that** the shock absorber (40) has a bottom provided with a recess (41).

5. The height-adjustable seatpost (1) as claimed in claim 4, **characterized in that** the screw (35) has a screw head (351) protruding from a top surface of the stopper (34) and received in the recess (41) and a screw rod (352) integrally connected to the screw head (351).

6. The height-adjustable seatpost (1) as claimed in claim 5, **characterized in that** the recess (41) has an inner ring surface (42) tightly connected to the screw head (351).

7. The height-adjustable seatpost (1) as claimed in claim 1, **characterized in that** the stopper (34) is integrally connected to the valve seat (31).

8. The height-adjustable seatpost (1) as claimed in claim 1, **characterized in that** the head (21) of the inner tube (20) has an opening (212), and wherein the height adjustment mechanism (30) is passed through the opening (212) and connected to the outer tube (10).

9. The height-adjustable seatpost (1) as claimed in any one of claims 1 to 7, **characterized in that** the inner tube (20) includes a cap (24) and the head (21) has a screw hole (211) and an opening (212), wherein the screw hole (211) is communicated with an exterior of the inner tube (20) through the opening (212), wherein the height adjustment mechanism (30) is passed through the opening (212) and connected to the outer tube (10), wherein the cap (24) is provided with an external thread (242) around an outer edge of the cap (24), and wherein the cap (24) is engaged with the screw hole (211) of the head (21) of the inner tube (20).

10. The height-adjustable seatpost (1) as claimed in claim 9, **characterized in that** the cap (24) has an end provided with a hexagonal hole (241).

## Patentansprüche

1. Höhenverstellbare Sattelstütze (1) mit Stoßdämpfung, welche umfasst:
ein Außenrohr (10);
ein Innenrohr (20), das vertikal beweglich im Außenrohr angeordnet ist und einen Kopf (21) aufweist, der sich außerhalb des Außenrohrs (10) befindet, sowie einen Boden (22), der dem Kopf (21) abgewandt ist und sich innerhalb des Außenrohrs (10) befindet, wobei das Innenrohr (20) ferner einen Anschlagflansch (23) aufweist, der sich an einer Innenwand des Innenrohrs (20) befindet;
einen Höhenverstellmechanismus (30), der sich innerhalb des Innenrohrs (20) befindet und ausgestaltet ist, das Innenrohr (20) relativ zum Außenrohr (10) zu bewegen, worin der Höhenverstellmechanismus (30) einen Stopper (34) aufweist, der sich oberhalb des Anschlagflansches (23) befindet und an den Anschlagflansch (23) anstoßen kann; und
einen Stoßdämpfer (40) mit zwei Enden, die jeweils an dem Kopf (21) des Innenrohrs (20) und dem Stopper (34) anliegen;
**dadurch gekennzeichnet, dass** der Höhenverstellmechanismus (30) ein Pneumatikzylinder ist, der einen Ventilsitz (31) und einen Ventilschaft (32) umfasst, der vertikal beweglich im Ventilsitz (31) angeordnet und mit dem Außenrohr (10) verbunden ist.

2. Höhenverstellbare Sattelstütze (1) nach Anspruch 1, **dadurch gekennzeichnet, dass** der Ventilsitz (31) eine Oberseite mit einem Schraubenloch (311) aufweist, der Stopper (34) ein Durchgangsloch (342) aufweist und der Höhenverstellmechanismus (30) eine Schraube (35) umfasst, die durch das Durchgangsloch (342) hindurchgeht und in das Schraubenloch (311) eingeschraubt wird.

3. Höhenverstellbare Sattelstütze (1) nach Anspruch 2, **dadurch gekennzeichnet, dass** der Stoßdämpfer (40) ein stoßdämpfendes Gummi ist.

4. Höhenverstellbare Sattelstütze (1) nach Anspruch 3, **dadurch gekennzeichnet, dass** der Stoßdämpfer (40) einen Boden aufweist, der mit einer Aussparung (41) versehen ist.

5. Höhenverstellbare Sattelstütze (1) gemäß Anspruch 4, **dadurch gekennzeichnet, dass** die Schraube (35) einen Schraubenkopf (351), der aus einer Oberseite des Stoppers (34) herausragt und in der Aussparung (41) aufgenommen ist, und einen Schraubenschaft (352) aufweist, der einstückig mit dem Schraubenkopf (351) verbunden ist.

6. Höhenverstellbare Sattelstütze (1) nach Anspruch 5, **dadurch gekennzeichnet, dass** die Aussparung (41) eine Innenringfläche (42) aufweist, die fest mit dem Schraubenkopf (351) verbunden ist.

7. Höhenverstellbare Sattelstütze (1) nach Anspruch 1, **dadurch gekennzeichnet, dass** der Stopper (34) einstückig mit dem Ventilsitz (31) verbunden ist.

8. Höhenverstellbare Sattelstütze (1) nach Anspruch 1, **dadurch gekennzeichnet, dass** der Kopf (21) des Innenrohrs (20) eine Öffnung (212) aufweist und der Höhenverstellmechanismus (30) durch die Öffnung (212) geführt und mit dem Außenrohr (10) verbunden ist.

9. Höhenverstellbare Sattelstütze (1) nach einem der Ansprüche 1 bis 7, **dadurch gekennzeichnet, dass** das Innenrohr (20) eine Kappe (24) umfasst und der Kopf (21) ein Schraubenloch (211) und eine Öffnung (212) aufweist, das Schraubenloch (211) über die Öffnung (212) mit einer Außenseite des Innenrohrs (20) in Verbindung steht, der Höhenverstellmechanismus (30) durch die Öffnung (212) geführt und mit dem Außenrohr (10) verbunden ist, die Kappe (24) mit einem Außengewinde (242) um einen Außenrand der Kappe (24) herum versehen ist und darin, dass die Kappe (24) mit dem Schraubenloch (211) des Kopfes (21) des Innenrohrs (20) in Eingriff steht.

10. Höhenverstellbare Sattelstütze (1) nach Anspruch 9, **dadurch gekennzeichnet, dass** die Kappe (24) ein Ende aufweist, das mit einem Sechskantloch (241) versehen ist.

## Revendications

1. Tige de selle réglable en hauteur (1) avec amortissement, comprenant:
un tube extérieur (10);
un tube intérieur (20) disposé de manière mobile verticalement dans le tube extérieur et comportant une tête (21) située à l'extérieur du tube extérieur (10) et un fond (22) opposé à la tête (21) et situé à l'intérieur du tube extérieur (10), le tube intérieur (20) comportant en outre une bride d'arrêt (23) située sur une paroi intérieure du tube intérieur (20);
un mécanisme de réglage en hauteur (30) situé à l'intérieur du tube intérieur (20) et configuré pour entraîner le tube intérieur (20) à se déplacer par rapport au tube extérieur (10), le mécanisme de réglage en hauteur (30) comportant une butée (34) situé au-dessus de la bride d'arrêt (23) et pouvant venir en butée contre la bride d'arrêt (23); et
un amortisseur (40) ayant deux extrémités respectivement en butée contre la tête (21) du tube intérieur (20) et la butée (34);
**caractérisé en ce que** le mécanisme de réglage en hauteur (30) est un vérin pneumatique comprenant un siège de soupape (31) et une tige de soupape (32) disposée de manière mobile verticalement dans le siège de soupape (31) et reliée au tube extérieur (10).

2. Tige de selle réglable en hauteur (1) selon la revendication 1, **caractérisée en ce que** le siège de soupape (31) comporte une partie supérieure pourvue d'un trou de vis (311), la butée (34) comporte un trou traversant (342), et le mécanisme de réglage en hauteur (30) comprend une vis (35) passant à travers le trou traversant (342) et se vissant dans le trou de vis (311).

3. Tige de selle réglable en hauteur (1) selon la revendication 2, **caractérisée en ce que** l'amortisseur (40) est un caoutchouc amortisseur.

4. Tige de selle réglable en hauteur (1) selon la revendication 3, **caractérisée en ce que** l'amortisseur (40) comporte une partie inférieure pourvue d'un évidement (41).

5. Tige de selle réglable en hauteur (1) selon la revendication 4, **caractérisée en ce que** la vis (35) comporte une tête de vis (351) faisant saillie à partir d'une surface supérieure de la butée (34) et logée dans l'évidement (41), et une tige de vis (352) reliée de manière solidaire à la tête de vis (351).

6. Tige de selle réglable en hauteur (1) selon la revendication 5, **caractérisée en ce que** l'évidement (41) comporte une surface annulaire intérieure (42) reliée de manière étanche à la tête de vis (351).

7. Tige de selle réglable en hauteur (1) selon la revendication 1, **caractérisée en ce que** la butée (34) est relié de manière solidaire au siège de soupape (31).

8. Tige de selle réglable en hauteur (1) selon la revendication 1, **caractérisée en ce que** la tête (21) du tube intérieur (20) comporte une ouverture (212), et dans laquelle le mécanisme de réglage en hauteur (30) passe à travers l'ouverture (212) et est relié au tube extérieur (10).

9. - Tige de selle réglable en hauteur (1) selon l'une quelconque des revendications 1 à 7, **caractérisée en ce que** le tube intérieur (20) comprend un capuchon (24) et la tête (21) comporte un trou de vis (211) et une ouverture (212), le trou de vis (211) communique avec l'extérieur du tube intérieur (20) à travers l'ouverture (212), dans lequel le mécanisme de réglage en hauteur (30) passe à travers l'ouverture (212) et est relié au tube extérieur (10), dans lequel le capuchon (24) est muni d'un filetage extérieur (242) autour d'un bord extérieur du capuchon (24), et dans lequel le capuchon (24) est engagé dans le trou de vis (211) de la tête (21) du tube intérieur (20).

10. Tige de selle réglable en hauteur (1) selon la revendication 9, **caractérisée en ce que** le capuchon (24) comporte une extrémité pourvue d'un trou hexagonal (241).
